# EUROPEAN PATENT SPECIFICATION

(11) **EP 4 296 072 B1**
(45) Date of publication and mention of the grant of the patent: **26.08.2026**
(21) Application number: 23180726.4
(22) Date of filing: 21.06.2023
(51) Int. Cl.: B60B 3/00, B60B 11/00, B60B 19/12, B62B 1/00, B66F 9/075

(54) **WHEEL ASSEMBLY FOR MATERIAL HANDLING VEHICLE**
RADANORDNUNG FÜR MATERIALHANDHABUNGSFAHRZEUG
ENSEMBLE ROUE POUR VÉHICULE DE MANUTENTION DE MATÉRIAUX

(30) Priority: 22.06.2022 US 202263354270 P
(43) Date of publication of application: 27.12.2023
(73) Proprietor: Superior Tire & Rubber Corp., Warren, PA 16365 (US)
(72) Inventor: PETERSON, Joseph J., Warren, PA 16365 (US); KNOTOWICZ, Kyle R., Jamestown, NY 14701 (US)
(74) Representative: Zellentin & Partner mbB Patentanwälte

(56) References cited:
- US-A- 2 618 490
- US-A- 3 814 456
- US-A1- 2016 075 542

## Description

This application is based upon and claims the benefit of priority under 35 U.S.C. § 119(e) to U.S. Provisional Application No. 63/354,270, filed June 22, 2022.

### FIELD OF THE INVENTION

This invention relates generally to a wheel assembly for a material handling vehicle and in particular, to a multi-axle and multi-wheel assembly adapted for use in material handling vehicles, such as Class II narrow aisle trucks or forklifts (classification according to the US Department of Labor Occupational Safety and Health Administration).

### BACKGROUND OF THE INVENTION

Material handling vehicles are powered industrial trucks designed for use in warehouses and may be required to operate in narrow aisles, for example, aisles that are twelve feet wide or less. The vehicles are typically classified as Class II narrow aisle forklifts or trucks, and include reach trucks, orders pickers, and very narrow aisle forklifts, also referred to as turret trucks. Many such material handling vehicles are provided with base legs or outriggers, which extend outward from the main body of the vehicle, typically on either side of the forks or platform. The outriggers prevent the vehicle from tipping forward when the vehicle is loaded with material.

The ends of the outriggers incorporate a load wheel, which supports the vehicle, whether the vehicle is stationary or transporting material from one location to another. The wheels are designed to operate indoors and are typically solid. Each of the wheels is mounted on an axle, with the axle aligned perpendicular to the usual direction of travel of the vehicle. The axle may be supported by a bracket, and the bracket is supported by the outrigger. Alternatively, the axle may be directly supported by the outrigger.

The nature of the applications for which Class II material handling vehicles are employed requires that they be able to turn with a relatively short radius, i.e., less than 36 inches (whereas other trucks, such as Class I or Class III trucks, have a much larger turning radius and are used in applications which do not require regular small radius turning). More preferably, however, the vehicles should exhibit essentially static turning, i.e., a turning radius of zero inches or less than one inch. Additionally, the wheels and outriggers must be capable of fitting around pallets, under warehouse racking, and between racking supports commonly found in warehouse storage systems to function effectively. Typically, the maximum total height of the wheels must be no greater than 6 inches in North America and 8 inches in Europe so that the wheel and outrigger assemblies can accommodate working with industry-standard storage systems (typical systems in the remainder of the world follow one of these two standards). Thus, while the load-bearing capacity of the wheel may be increased by increasing the size of the wheel, operating restrictions in the warehouse environment limit the diameter and width of the wheel.

To increase the load capacity of the outriggers, two wheels are sometimes provided adjacent to the end of each outrigger. For example, a first wheel is mounted on a first axle, a second wheel is mounted on a second axle, and the first and second axles are mounted on the outrigger front-to-back, referred to herein as being in tandem. Accordingly, when the vehicle is moving forward, the first and second wheels roll in the direction of travel, that is, with the first and second axles aligned perpendicular to the direction of travel.

Operating a material handling vehicle in a warehouse requires that the vehicle be capable of pivoting in limited space. The pivot point of a typical Class II material handling vehicle is near the point of attachment of the outrigger to the body of the vehicle, referred to herein as the proximate end of the outrigger. For example, the vehicle may be equipped with two wheels at the back of the body and a wheel assembly at the distal end of each outrigger. The pivot point of the vehicle, when turning, is approximately midway between the back wheels and the wheel assemblies at the distal ends of the outriggers.

The positions of the load wheels located in the vehicle's outriggers are typically fixed.

For example, the load wheels are mounted on an axle and the axle may be oriented perpendicular to the linear extent of the outrigger. When the vehicle pivots, however, one side of each load wheel will be on the inside of the turn, and one side of each load wheel will be on the outside of the turn. It may be understood that when the vehicle pivots, the inside arc of the load wheel will travel less distance than the outside arc of the load wheel, which creates a scuffing action and extra wear on the tires of the load wheels. The wear may be seen as abrasion, coning and flat spotting on the tire of the load wheel. As the width of the wheel increases, for example, to accommodate heavier loads, the problem of extra wear is exacerbated.

Various attempts to develop an improved wheel assembly are discussed in the following patent references: Frischmann-US 2,618,490; Bryntse-US 3,814,456; and Passeri-US 2006/0232030 AI. However, these arrangements include several drawbacks, including large turning radiuses that are not capable of functioning in modern warehouse settings with narrow aisles, increased wear which negatively impacts wheel life and truck service downtime, and a limited load capacity not capable of meeting projected load demands. Thus, there remains a need for an improved truck incorporating a wheel assembly and outrigger capable of accommodating the requirements of modern warehousing.

In attempting to address increased load requirements, the conventional wisdom in the art has been to provide a single wide wheel per axle to maximize the contact area with the floor. This conventional approach has recently led industry participants to fabricate extra-wide outriggers (e.g., by modifying standard equipment via welding) capable of holding a wider wheel to provide a wheel capable of bearing additional load.

As detailed herein, the inventors of the present application have designed a wheel assembly and outrigger that proceeds against this conventional wisdom and provides enhanced load-bearing capacity and superior life with respect to conventional designs.

### SUMMARY OF THE INVENTION

The present invention is directed to a wheel assembly for a material handling vehicle.

The wheel assembly may be mounted in the outrigger of a material handling vehicle. Thus, the present invention is also directed to an outrigger incorporating a wheel assembly, as well as a material handling vehicle incorporating such a wheel assembly. In one embodiment, the wheel assembly is provided with a first axle and at least two wheels mounted on the axle. The first axle may have more than two wheels mounted thereon, for example, three, four, or more wheels. Preferably, the wheels rotate independently of each other. Accordingly, when the vehicle incorporating the wheel assembly pivots, the wheel on the inside of the turning radius is free to travel less distance than the wheel on the outside of the turning radius. Such arrangement provides less contact surface per wheel overall but reduces the degree of coning as to each individual wheel. Such an arrangement also allows for a smaller turning radius -- in some embodiments, the turning radius of a truck incorporating a wheel assembly provided herein is essentially zero. The embodiments discussed herein, when undergoing testing, also surprisingly provide a larger load capacity as compared to the traditional single-wheel arrangement.

The wheel assembly is also provided with a second axle and at least two wheels mounted on the second axle (three, four, or more wheels may also be provided). Preferably, the wheels of the second axle rotate independently of each other. The second axle and wheels may be identical to the arrangement of the first axle and wheels, or the second axle and wheels may be different. For example, the first axle may have two wheels and the second axle may have three wheels.

The first and second axles may be mounted directly on the outrigger of a material handling vehicle. For example, the outrigger may contain a recess at the distal end, that is, the end opposite the point of attachment to the body of the vehicle, and the first and second axles and wheels may be mounted on the outrigger in tandem. Alternatively, the first and second axles and wheels may be arranged in tandem, as part of a module that is mounted on the distal end of the outrigger.

Generally, material handling vehicles used in combination with the present invention will have two outriggers, for example, one on each side of the forks or platform at the front of the vehicle (a single outrigger or additional outriggers may be used, however). Accordingly, the wheel assembly of the present invention may be mounted at the end of each of the outriggers.

In another embodiment of the invention, the first and second axles and wheels are supported by brackets positioned at the ends of the axles, with the brackets aligned parallel to each other and perpendicular to the longitudinal extent of the axles. The wheel assembly, which in this embodiment includes the brackets, axles, and wheels, can then be pivotally mounted on the outrigger. The pivot point of the bracket assembly is between the first and second axles, but the pivot point, first axle, and second axle are not necessarily colinear or coplanar, and the pivot point may be offset to a position above the first and second axles with respect to the ground. By way of example, with the pivot point as the vertex, imaginary rays extending from the vertex to the first and second axles may form an angle from 20° to 180°, preferably greater than 30° and less than 180°, in particular, from 35° to 170°, and more particularly, from 40° to 150°.

The wheel assembly can be pivotally mounted to the outrigger in a variety of ways. For example, a shaft may extend from the first bracket to the second bracket, parallel to the first and second axles, and the shaft may engage the outrigger. Alternatively, the first and second brackets may be provided with outwardly facing projections, and the projections may engage the outrigger. Alternatively, the outrigger may be provided with inwardly facing projections, and the projects may engage the first and/or second bracket. Alternatively, the outrigger and the first and/or second brackets may have a recess configured to accommodate mounting hardware such as a shaft, bolt, or the like.

The inventors of the present application have determined that the relationship between the distance from the first axle to the second axle and the aggregate width of the wheels on an axle exerts a strong influence on the performance of the wheel assembly. In the case of two wheels mounted on an axle, the aggregate width of the wheels is measured from the outwardly facing side of the first wheel to the outwardly facing side of the second wheel. In the case of three or more wheels mounted on the axle, the aggregate width is measured from the outwardly facing side of the first wheel to the outwardly facing side of the wheel farthest from the first wheel. The distance between the axles is measured from the center line of the first axle to the center line of the second axle. If the distance between the axles is X, and the aggregate width of the wheels on an axle is Y, then the ratio of X:Y may be between 0.5 and 1.3, in particular, between 0.5 and 1.2, more particularly, between 0.6 and 1.1. If the aggregate width of the wheels on the first axle and the second axle is different, then X is the higher of the aggregate widths.

The inventors of the present application have also determined that the relationship between the distance from the first axle to the pivot point of the wheel assembly and the distance from the second axle to the pivot point of the wheel assembly also exerts an influence on the performance of the wheel assembly. In particular, where the distance between the first axle and the pivot point is D, and the distance between the second axle and the pivot point is E, then the ratio of D:E should be between 1:4 to 4:1, and, in particular, from 1:2.3 to 2.3:1, and more particularly, from 1:1.5 to 1.5:1.

The inventors of the present application have also determined the distance from the first axle to the second axle should be less than two times the mean wheel diameter for the wheels used on the first and second axles. More preferably, the distance should be less than 1.9, 1.8, 1.7, 1.6, 1.5, 1.4, 1.3, 1.2, or 1.1 times the mean wheel diameter. Most preferably, the distance from the first axle to the second axle should be 1.1 or 1.05 times the mean wheel diameter, i.e., locating the wheels as close as possible while leaving sufficient room for debris to pass between the wheels without causing damage or becoming lodged in the wheel assembly.

The wheel assemblies and outriggers described herein may incorporate materials commonly used in wheel assemblies and outriggers. For example, the wheels include a tire made of a solid elastomer, such as a polyurethane, a rim made of a metal alloy, and a bearing. The brackets, brace, outriggers, and associated mounting projections and/or shafts are made of a metal alloy.

To be compatible with typical material handling vehicles and modern warehouse configurations, the wheel assembly of the present application preferably has a total width of less than seven inches and a total height of less than six inches (North America) or eight inches (Europe). The present invention has a number of advantages. Two axles and sets of wheels are provided to distribute the load. Yet instead of increasing the resistance to pivoting a material handling vehicle incorporating the wheel assembly, the wheels along each axle are able to rotate independently, thereby decreasing the resistance. Furthermore, in the embodiment in which the wheel assembly is pivotally mounted on an outrigger, the wheel assembly is generally able to keep both wheels in contact with the floor, even if the floor is uneven, thereby distributing the load.

Further objects, features, and advantages of the present invention will become apparent from the detailed description of preferred embodiments, which is set forth below, when considered together with the figures of drawing. The invention also relates to all combinations of preferred embodiments to the extent that they are not mutually exclusive.

### BRIEF DESCRIPTION OF THE DRAWINGS

Figure 1 is a side view of a material handling vehicle of the type for use with the wheel assembly of the present invention.
Figure 2 is an isometric view of the wheel assembly of the present invention having a bracket with projections to engage the leg of a material handling vehicle.
Figure 3 is an isometric view of the wheel assembly of the present invention having brackets with a shaft to engage the leg of a material handling vehicle.
Figure 4 is a cross-sectional view of a wheel assembly showing the measurement of X (the distance between the first axle and the second axle) and Y (the aggregate width of the wheels).
Figure 5 is a side elevation view of the wheel assembly of Figure 3, illustrating the relative distances of the first axle and second axle from the pivot point of the assembly.
Figures 6-12 depict examples of Class I to Class VII powered industrial trucks according to the United States Department of Labor Occupational Safety and Health Administration (OSHA).

### DETAILED DESCRIPTION OF THE INVENTION

Without intending to limit the scope of the invention, the preferred embodiments and features are hereinafter set forth. As used herein, the term "wheel" is intended to encompass a tire, which may be a solid elastomer, such as a polyurethane, a rim on which the tire is mounted, and a set of bearing within the rim.

As referred to herein, the term "powered industrial truck" means a mobile, power-propelled truck used to carry, push, pull, lift, stack, or tier material. Vehicles that are used for earth moving and over-the-road hauling are excluded. Under OSHA regulations, there are seven classes of powered industrial trucks:
- Class I: Electric Motor, Sit-down Rider, Counter-Balanced Trucks (Solid and Pneumatic Tires). Powered industrial trucks in this class are electrically powered and are typically used indoors on flat, even surfaces. They have cushion or pneumatic tires.
- Class II: Electric Motor Narrow Aisle Trucks (Solid Tires). Powered industrial trucks in this class are electrically powered and designed for tight warehouse aisles. They are high-lift machines, often used in distribution centers and warehouses. They are designed to operate in narrow aisle stacking areas where Class I and Class III trucks cannot operate.
- Class III: Electric Motor Hand Trucks or Hand/Rider Trucks (Solid Tires). Powered industrial trucks in this class are hand-controlled (either walk-behind or operated on a small platform) and used for low-lift applications, e.g., pallet jacks.
- Class IV: Internal Combustion Engine Trucks (Solid Tires). Powered industrial trucks in this class include an internal combustion engine and are suited for indoor use on smooth floors. They are typically used for moving materials onto and off of trucks and for warehousing.
- Class V: Internal Combustion Engine Trucks (Pneumatic Tires). Powered industrial trucks in this class have an internal combustion engine and are designed for rough surfaces outdoors. They are commonly used in loading docks and lumber yards.
- Class VI: Electric and Internal Combustion Engine Tractors (Solid and Pneumatic Tires). Powered industrial trucks in this class are usually sit-down rider tow tractors used for pulling loads (rather than lifting). They can be used in both indoor and outdoor environments.
- Class VII: Rough Terrain Forklift Trucks (Pneumatic Tires). Powered industrial trucks in this class are typically used in construction, logging, and other rough terrain applications. They have large, tractor-style tires for navigating over difficult terrain, and are frequently used for lifting and transporting heavy loads.

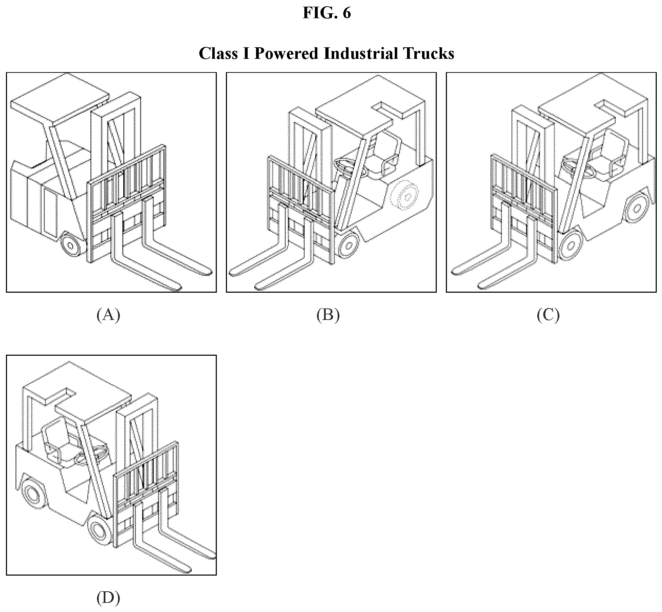

Figures 6-12 of this application depict examples of Class I to Class VII powered industrial trucks according to the United States Department of Labor Occupational Safety and Health Administration (OSHA).

As indicated herein, the present application relates primarily to Class II powered industrial trucks, i.e., narrow aisle forklifts or trucks, including reach trucks, orders pickers, and very narrow aisle forklifts, also referred to as turret trucks, and, more specifically, to wheel assemblies and outriggers used therein.

As referred to herein, disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter may define endpoints for a range of values that may be claimed for the parameter. For example, if Parameter X is exemplified herein to have value A and also exemplified to have value Z, it is envisioned that Parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X may have other ranges of values including 1-9, 1-8, 1-3, 1-2, 2-10, 2-8, 2-3, 3-10, 3-9, and so on.

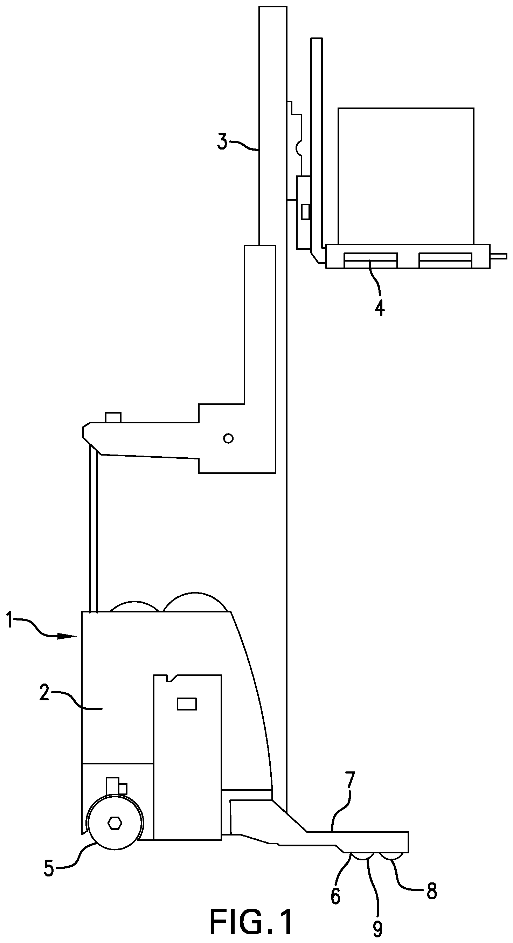

Figure 1 shows Class II material handling vehicle 1, namely, a reach truck. Vehicle 1 has body 2 supporting mast 3, for raising and lowering forks 4. Drive wheel 5 is positioned at the rear of body 2, along with a caster wheel (not shown). Vehicle 1 is provided with outriggers 6 and 7, which extend from the front of body 2, on either side of forks 4.

Each of outriggers 6 and 7 has first axle 8, with a plurality of wheels mounted thereon, and second axle 9, with a plurality of wheels mounted thereon. First axle 8 and second axle 9 are arranged in tandem, with the axles aligned perpendicular to the longitudinal extend of the outrigger, which in this case is the ordinary direction of travel of vehicle 1.

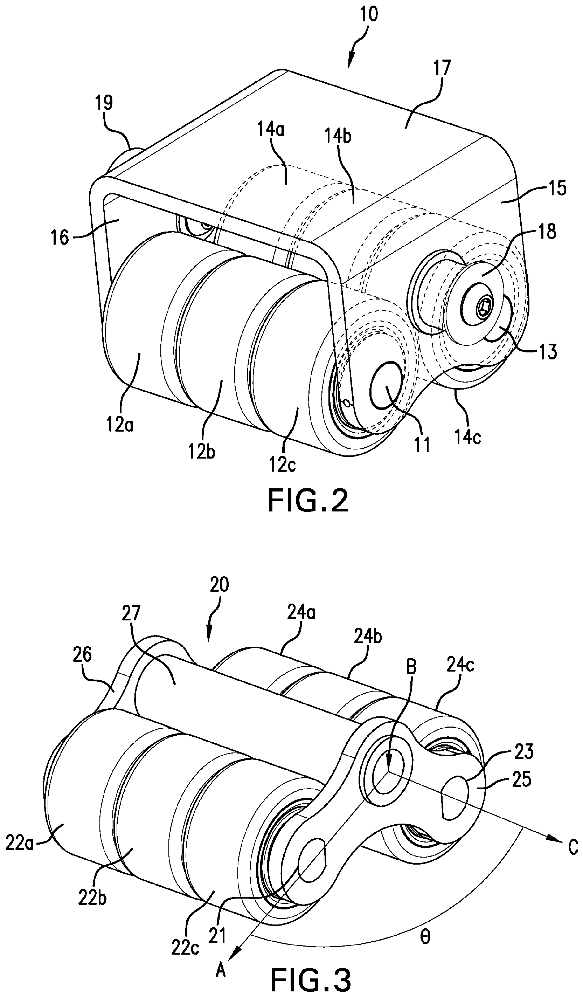

Referring to Figure 2, wheel assembly 10 has first axle 11, with wheels 12a, 12b and 12c mounted thereon. Wheels 12a, 12b and 12c rotate independently of each other. Wheel assembly 10 is provided with second axle 13, with wheels 14a, 14b and 14c mounted thereon, which also rotate independently of each other. Axles 11 and 13 each have one end supported by bracket 15, and the axles each have an opposite end supported by bracket 16. Brackets 15 and 16 are joined together by brace 17, which spans the wheels 12a-c and 14a-c, and maintains brackets 15 in the desired orientation, that is, parallel to each other and perpendicular to axles 11 and 13. Bracket 15, bracket 16 and brace 17 may be fashioned from a unitary plate of metal, which has been bent into the desired orientation.

Wheel assembly 10 is provided with mounting hardware, for pivotally engaging an outrigger of a material handling vehicle. In the embodiment illustrated in Figure 2, bracket 15 is provided with projection 18, and bracket 16 is provided with projection 19. Accordingly, an outrigger of a material handling vehicle can be configured to accommodate projections 18 and 19, in a way that will allow wheel assembly 10 to pivot on an imaginary axis extending between projections 18 and 19. In this way, the wheel assembly forms a complete module, which can be mounted on the outrigger of a material handling vehicle.

Figure 3 shows another embodiment of the wheel assembly of the present invention.

Wheel assembly 20 has first axle 21, with wheels 22a, 22b and 22c mounted thereon. Wheels 22a, 22b and 22c rotate independently of each other. Wheel assembly 20 is provided with second axle 23, with wheels 24a, 24b and 24c mounted thereon, which also rotate independently of each other. Axles 21 and 23 each have one end supported by bracket 25 and the axles each have an opposite end supported by bracket 26. Brackets 25 and 26 are joined together by shaft 27, which maintains the brackets in parallel relationship, perpendicular to the axles. When wheel assembly 20 is mounted on an outrigger, wheel assembly 20 pivots on an axis extending through shaft 27. Thus, wheel assembly 20 forms a complete module, which can be mounted on the outrigger of a material handling vehicle.

It has been found to be advantageous to offset the axis on which the wheel assembly pivots from the first and second axles. In other words, the pivot point, first axle and second axle may not necessarily be in a straight line. For example, if the pivot point of the wheel assembly is taken as the vertex, then a ray extending from the vertex to the first axle forms one arm of an angle and a ray extending from the vertex to the second axle forms a second arm of an angle.

The angle between the pivot point, first axle and second axle may range from 20° to 180°, preferably greater than 30° and less than 180°, in particular, from 35° to 170°, and more particularly, from 40° to 150°. Referring to Figure 3, the angle is show as 8, which is formed by arm "A", vertex "B" and arm "C." In an embodiment of the present application, the pivot point is located less than one wheel radius above a line (or plane) connecting the first and second axles, to maintain stability when the wheel, wheel assembly, outrigger, or truck strikes an object. In an alternative embodiment, a negative angle may be provided, i.e., the center pivot may be located below the centerline of one or more of the axles with respect to the ground or floor. Such an arrangement would provide extra stability with respect to circumstances in which the wheels, wheel assembly, outrigger, or truck struck an object. In the alternative embodiment, the wheel assembly would create a level to return the wheel assembly to the desired orientation.

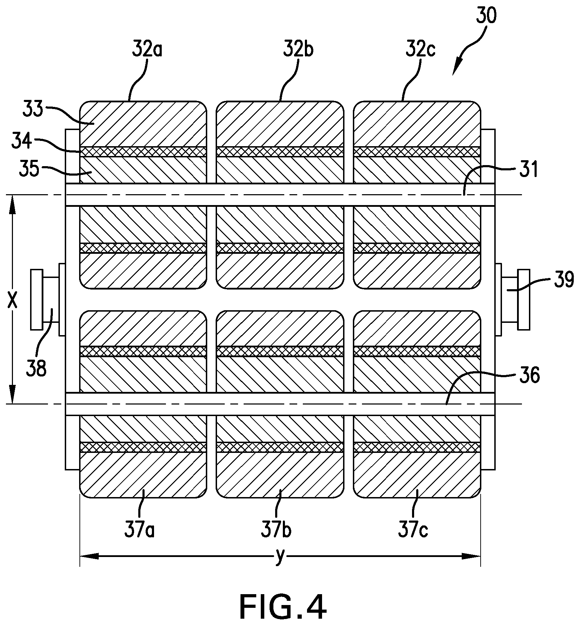

Referring to Figure 4, a cross-sectional view of a wheel assembly of the present invention is shown. Wheel assembly 30 has first axle 31, with wheels 32a, 32b and 32c mounted thereon, and which rotate independently of each other. Each of the wheels may be comprised of outer tire 33, mounted on rim 34. Bearings 35 are provided between rim 34 and axle 31, as is known in the art. Wheel assembly 30 is further provided with second axle 36, with wheels 37a, 37b and 37c, which rotate independently of each other. Wheels 37a-c may be comprised of the same tire, rim and bearings arrangement, as illustrated with regard to wheel 32a. Wheel assembly 30 has projections 38 and 39 for pivotally mounting the wheel assembly on the outrigger of a material handling vehicle, as described with regard to the embodiment of the invention disclosed in Figure 3.

Figure 4 illustrates the relationship between the distance from the first axle to the second axle, shown as "X," and the aggregate width of the wheels on an axle, shown as "Y." The ratio of X divided by Y may be between 0.5 and 1.3, in particular, between 0.5 and 1.2, more particularly, between 0.6 and 1.1.

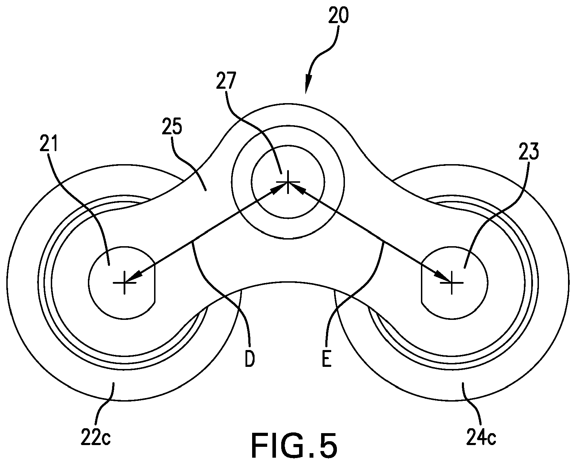

Figure 5 is a side view of the wheel assembly of Figure 3, which is also applicable to the wheel assembly illustrated in Figure 2. Referring to Figures 4 and 5, wheel assembly 20 has first axle 21, wheels 22a-22c, second axle 23 and wheels 24a-24c. Axles 21 and 23 are supported by brackets 25 and 26. Shaft 27 is the pivot point of wheel assembly 20. Segment "D" is the distance between the axis of axle 21 to the axis of shaft 27. Segment "E" is the distance between the axis of axle 23 to the axis of shaft 27. The ratio of segment D to segment E may range from 1:4 to 4:1, in particular, from 1:2.3 to 2.3:1, more particularly, from 1:1.5 to 1.5:1.

Figure 6 includes several examples of Class I powered industrial trucks. These examples are enumerated as follows: (A) Code 1: Counterbalanced Rider Type, Stand Up. (B) Code 4: Three Wheel Electric Trucks, Sit Down. (C) Code 5: Counterbalanced Rider, Cushion Tires, Sit Down. (D) Code 6: Counterbalanced Rider, Pneumatic or Either Type Tire, Sit Down.

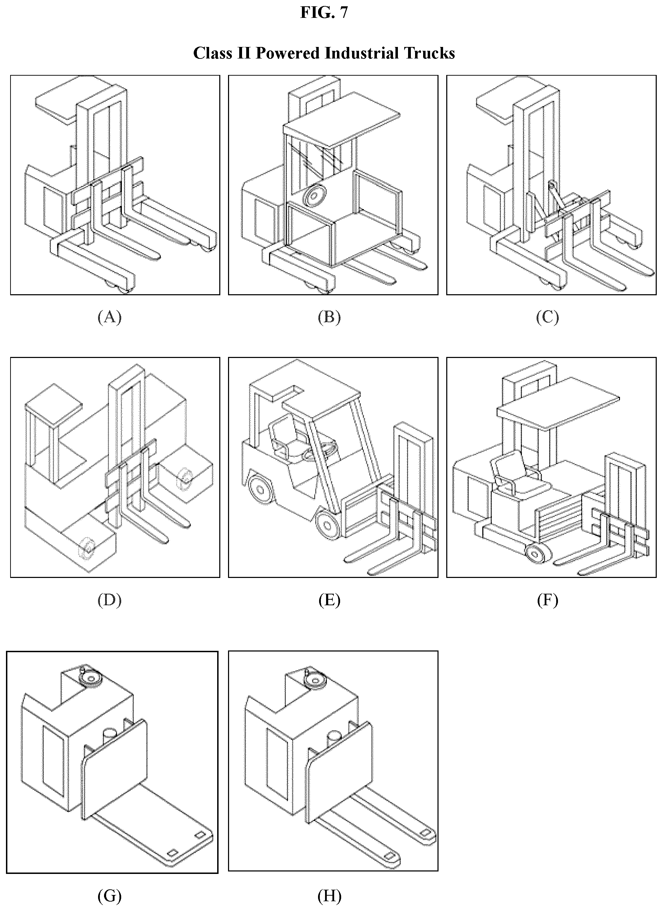

Figure 7 includes several examples of Class II powered industrial trucks. These examples are enumerated as follows: (A) Code 1: High Lift Straddle. (B) Code 2: Order Picker. (C) Code 3: Reach Type Outrigger. (D) Code 4: Side Loaders: Platforms. (E) Code 4: Side Loaders: High Lift Pallet. (F) Code 4: Turret Trucks. (G) Code 6: Low Lift Platform. (H) Code 6: Low Lift Pallet.

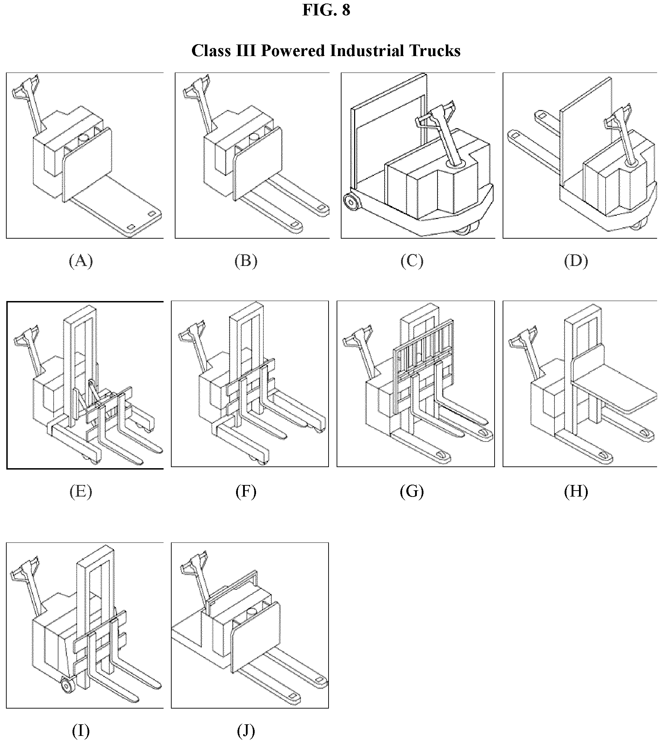

Figure 8 includes several examples of Class III powered industrial trucks. These examples are enumerated as follows: (A) Code 1: Low Lift Platform. (B) Code 2: Low Lift Walkie Pallet. (C) Code 3: Tractors. (D) Code 4: Low Lift Walkie/Center Control. (E) Code 5: Reach Type Outrigger. (F) Code 6: High Lift Straddle. (G) Code 6: Single Face Pallet. (H) Code 6: High Lift Platform. (I) Code 7: High Lift Counterbalanced. (J) Code 8: Low Lift Walkie/Rider Pallet and End Control.

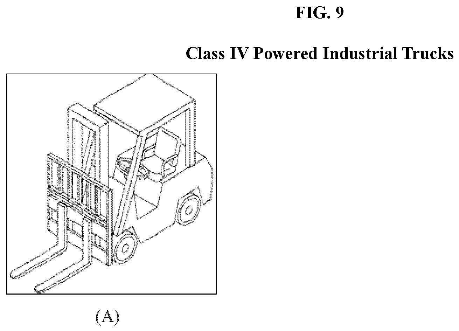

Figure 9 includes an example of a Class IV powered industrial truck. These example is enumerated as follows: (A) Code 3: Fork, Counterbalanced (Cushion Tire).

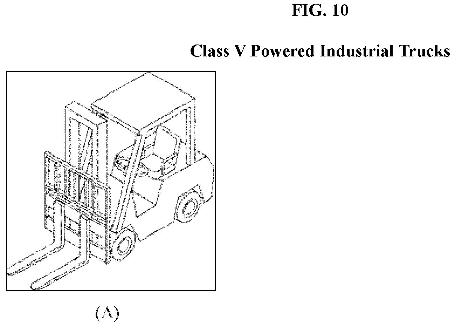

Figure 10 includes an example of a Class V powered industrial truck. These example is enumerated as follows: (A) Code 4: Fork, Counterbalanced (Pneumatic Tire).

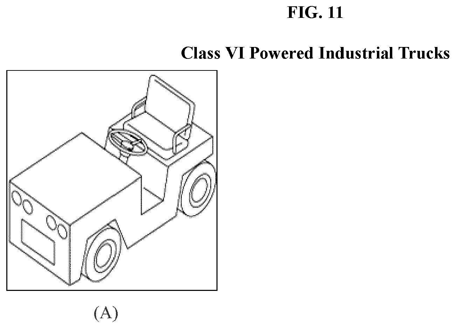

Figure 11 includes an example of a Class VI powered industrial truck. These example is enumerated as follows: (A) Code 1: Sit-Down Rider (Draw Bar Pull Over 999 lbs.).

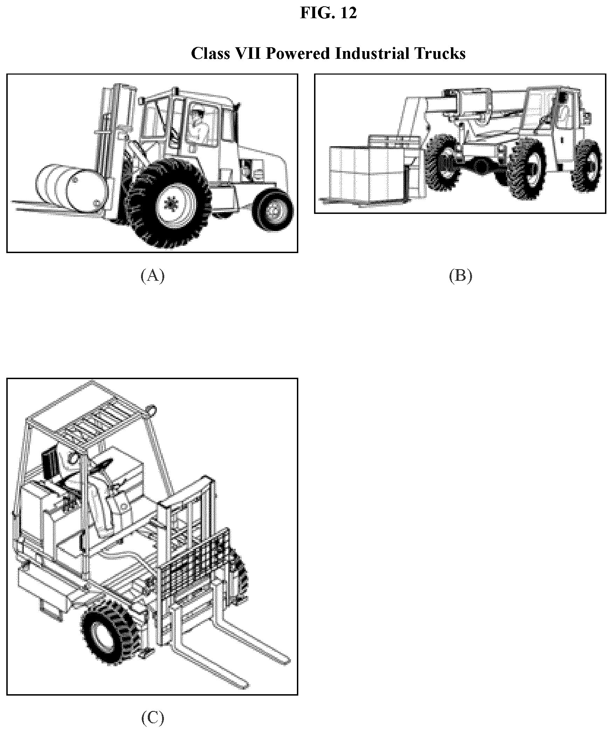

Figure 12 includes several examples of Class VII powered industrial trucks. These examples are enumerated as follows: (A) Vertical mast type. (B) Variable reach type. (C) Truck/trailer mounted.

The present invention has been described in relation to a material handling vehicle having outriggers or legs, extending from the body of the vehicle, for example, laterally in the direction of the forks or platform that is raised to retrieve pallets and goods stored in a warehouse. A pair of the subject wheel assemblies may also be employed to replace a set of load wheels positioned in the back or front of the body of the vehicle, that is, directly under the body, rather than in an outrigger.

There are, of course, many alternative embodiments and modifications of the invention intended to be included in the scope of the claims.

### FURTHER EMBODIMENTS

A first embodiment (A-1) of the invention relates to a wheel assembly for an outrigger of a material handling vehicle, comprising:
a first axle and a first wheel mounted on the first axle;
a second axle and a first wheel mounted on the second axle;
wherein the first axle and the second axle are mounted on the outrigger, in tandem,
wherein
a second wheel is mounted on the first axle, whereby the first wheel and the second wheel rotate independently;
and a second wheel is mounted on the second axle, whereby the first wheel and the second wheel rotate independently;
   and
a third wheel (12c, 22c, 32c) is mounted on the first axle, and the third wheel rotates independently of the first and second wheels of the first axle.

A preferred embodiment (A-2) relates to tThe wheel assembly of embodiment A-1, wherein a distance between the first axle and the second axle has a value of X, and a distance between an outside of the first wheel and an outside of the second wheel on the first axle has a value of Y, and X/Y is between 0.5 and 1.3.

A preferred embodiment (A-3) relates to the wheel assembly of one ore more of embodiments A-1 to A-2, wherein the first axle has a first end and a second end and the second axle has a first end and a second end, and the wheel assembly further comprises (i) a first bracket engaging the first end of the first axle and the first end of the second axle, and (ii) a second bracket engaging the second end of the first axle and the second end of the second axle, whereby the first bracket and the second bracket are parallel to each other and perpendicular to the first axle and second axle, and whereby the first and second brackets can be pivotally mounted on the outrigger.

A preferred embodiment (A-4) relates to the wheel assembly of one ore more or all of embodiments A-1 to A-3, further comprising a shaft having a first end engaging the first bracket and a second end engaging the second bracket, and the wheel assembly can be mounted on the outrigger, whereby the wheel assembly pivots around the shaft.

A preferred embodiment (A-5) relates to the wheel assembly of one ore more or all of embodiments A-1 to A-4, wherein the first bracket has a first outwardly facing projection and the second bracket has a second outwardly facing projection and the first projection and the second projection can engage the outrigger, whereby the wheel assembly pivots around the first and second projections.

A preferred embodiment (A-6) relates to the wheel assembly of one ore more or all of embodiments A-1 to A-5, whereby the wheel assembly pivots at a point, and the first axle and the second axle are at an angle of 30° to 180° relative to the pivot point.

A preferred embodiment A-7 relates to the wheel assembly of one ore more or all of embodiments A-1 to A-6, further comprising a third wheel mounted on the second axle, and the third wheel rotates independently of the first and second wheels on the second axle.

A preferred embodiment A-8 relates to the wheel assembly of one ore more or all of embodiments A-1 to A-7, wherein a distance between the first axle and the second axle has a value of X, and a distance between an outside of the first wheel and an outside of the third wheel on the first axle has a value of Y, and X/Y is between 0.5 and 1.3.

A preferred embodiment A-9 relates to the wheel assembly of one ore more or all of embodiments A-1 to A-8, wherein the first axle has a first end and a second end and the second axle has a first end and a second end, and the wheel assembly further comprises (i) a first bracket engaging the first end of the first axle and the first end of the second axle, and (ii) a second bracket engaging the second end of the first axle and the second end of the second axle, whereby the first bracket and the second bracket are parallel to each other and perpendicular to the first axle and second axle, and whereby the first and second brackets can be pivotally mounted on the outrigger.

The foregoing description of preferred embodiments of the invention has been presented for purposes of illustration and description only. It is not intended to be exhaustive or to limit the invention to the precise form disclosed, and modifications and variations are possible and/or would be apparent in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto and that the claims encompass all embodiments of the invention, including the disclosed embodiments and their equivalents.

## Claims

1. A wheel assembly (10, 20, 30) for an outrigger (6,7) of a material handling vehicle (1), comprising:
a first axle (8, 11, 21, 31) and a first wheel (12a, 22a, 32a) mounted on the first axle;
a second axle (9, 13, 23, 36) and a further first wheel (14a, 24a, 37a) mounted on the second axle;
wherein the first axle and the second axle are mounted on the outrigger, in tandem;
**characterized in that**
a second wheel (12b, 22b, 32b) is mounted on the first axle, whereby the first wheel and the second wheel rotate independently; and **in that**
a further second wheel (14b, 24b, 37b) is mounted on the second axle, whereby the further first wheel and the further second wheel rotate independently;
and
a third wheel (12c, 22c, 32c) is mounted on the first axle, and the third wheel rotates independently of the first and second wheels of the first axle.

2. The wheel assembly of claim 1, wherein a distance between the first axle (8, 11, 21, 31) and the second axle (9, 13, 23, 36) has a value of X, and a distance between an outside of the first wheel (12a, 22a, 32a) and an outside of the second wheel (12b, 22b, 32b) on the first axle has a value of Y, and X/Y is between 0.5 and 1.3.

3. The wheel assembly of claim 2, wherein the first axle (8, 11, 21, 31) has a first end and a second end and the second axle (9, 13, 23, 36) has a first end and a second end, and the wheel assembly further comprises (i) a first bracket (15, 25) engaging the first end of the first axle and the first end of the second axle, and (ii) a second bracket (16, 26) engaging the second end of the first axle and the second end of the second axle, whereby the first bracket and the second bracket are parallel to each other and perpendicular to the first axle and second axle, and whereby the first and second brackets can be pivotally mounted on the outrigger.

4. The wheel assembly of claim 3, further comprising a shaft (27) having a first end engaging the first bracket (25) and a second end engaging the second bracket (26), and the wheel assembly can be mounted on the outrigger (6,7), whereby the wheel assembly pivots around the shaft.

5. The wheel assembly of claim 3, wherein the first bracket (15) has a first outwardly facing projection (18) and the second bracket (16) has a second outwardly facing projection (19) and the first projection and the second projection can engage the outrigger (6, 7), whereby the wheel assembly pivots around the first and second projections.

6. The wheel assembly of claim 3, whereby the wheel assembly pivots at a point, and the first axle and the second axle are at an angle of 30° to 180° relative to the pivot point.

7. The wheel assembly of claim 1, further comprising a third wheel (14c, 24c, 37c) mounted on the second axle (9, 13, 23, 36), and the third wheel rotates independently of the further first and second wheels on the second axle.

8. The wheel assembly of claim 1, wherein a distance between the first axle (8, 11, 21, 31) and the second axle (9, 13, 23, 36) has a value of X, and a distance between an outside of the first wheel (12a, 22a, 32a) and an outside of the third wheel (12c, 22c, 32c) on the first axle has a value of Y, and X/Y is between 0.5 and 1.3.

9. The wheel assembly of claim 8, wherein the first axle (8, 11, 21, 31) has a first end and a second end and the second axle (9, 13, 23, 36) has a first end and a second end, and the wheel assembly further comprises (i) a first bracket (15, 25) engaging the first end of the first axle and the first end of the second axle, and (ii) a second bracket (16, 26) engaging the second end of the first axle and the second end of the second axle, whereby the first bracket and the second bracket are parallel to each other and perpendicular to the first axle and second axle, and whereby the first and second brackets can be pivotally mounted on the outrigger (6, 7).

## Patentansprüche

1. Radanordnung (10, 20, 30) für eine Abstützung (6, 7) eines Fahrzeugs für den Materialtransport (1), umfassend:
eine erste Achse (8, 11, 21, 31) und ein erstes Rad (12a, 22a, 32a), das an der ersten Achse angeordnet ist;
eine zweite Achse (9, 13, 23, 36) und ein weiteres erstes Rad (14a, 24a, 37a), das an der zweiten Achse angeordnet ist;
wobei die erste Achse und die zweite Achse hintereinander an der Abstützung angeordnet sind;
**dadurch gekennzeichnet, dass**
ein zweites Rad (12b, 22b, 32b) an der ersten Achse angeordnet ist, wobei das erste Rad und das zweite Rad unabhängig voneinander rotieren; und dass ein weiteres zweites Rad (14b, 24b, 37b) an der zweiten Achse angeordnet ist, wobei das weitere erste Rad und das weitere zweite Rad unabhängig voneinander rotieren;
und
ein drittes Rad (12c, 22c, 32c) an der ersten Achse angeordnet ist und das dritte Rad unabhängig von dem ersten und dem zweiten Rad der ersten Achse rotiert.

2. Radanordnung nach Anspruch 1, wobei ein Abstand zwischen der ersten Achse (8, 11, 21, 31) und der zweiten Achse (9, 13, 23, 36) einen Wert von X aufweist, und ein Abstand zwischen einer Außenseite des ersten Rades (12a, 22a, 32a) und einer Außenseite des zweiten Rades (12b, 22b, 32b) auf der ersten Achse einen Wert von Y aufweist, und X/Y zwischen 0,5 und 1,3 liegt.

3. Radanordnung nach Anspruch 2, wobei die erste Achse (8, 11, 21, 31) ein erstes Ende und ein zweites Ende aufweist und die zweite Achse (9, 13, 23, 36) ein erstes Ende und ein zweites Ende aufweist, und die Radanordnung ferner umfasst: (i) eine erste Wange (15, 25), die mit dem ersten Ende der ersten Achse und dem ersten Ende der zweiten Achse in Eingriff steht, und (ii) eine zweite Wange (16, 26), die mit dem zweiten Ende der ersten Achse und dem zweiten Ende der zweiten Achse in Eingriff steht, wobei die erste Wange und die zweite Wange parallel zueinander und senkrecht zur ersten Achse und zur zweiten Achse angeordnet sind, und wobei die erste und die zweite Wange schwenkbar an der Abstützung anordbar sind.

4. Radanordnung nach Anspruch 3, ferner umfassend eine Welle (27) mit einem ersten Ende, das mit der ersten Wange (25) in Eingriff steht, und einem zweiten Ende, das mit der zweiten Wange (26) in Eingriff steht, wobei die Radanordnung an der Abstützung (6, 7) anordbar ist, wodurch die Radanordnung um die Welle schwenkt.

5. Radanordnung nach Anspruch 3, wobei die erste Wange (15) einen ersten, nach außen gerichteten Vorsprung (18) und die zweite Wange (16) einen zweiten, nach außen gerichteten Vorsprung (19) aufweist und der erste Vorsprung und der zweite Vorsprung mit der Abstützung (6, 7) in Eingriff bringbar sind, wodurch die Radanordnung um den ersten und den zweiten Vorsprung schwenkt.

6. Radanordnung nach Anspruch 3, wobei die Radanordnung um einen Punkt schwenkt, und die erste Achse und die zweite Achse in einem Winkel von 30° bis 180° relativ zu dem Schwenkpunkt angeordnet sind.

7. Radanordnung nach Anspruch 1, ferner umfassend ein drittes Rad (14c, 24c, 37c), das an der zweiten Achse (9, 13, 23, 36) angeordnet ist, und wobei das dritte Rad unabhängig von dem weiteren ersten und dem weiteren zweiten Rad an der zweiten Achse rotiert.

8. Radanordnung nach Anspruch 1, wobei ein Abstand zwischen der ersten Achse (8, 11, 21, 31) und der zweiten Achse (9, 13, 23, 36) einen Wert von X aufweist, und ein Abstand zwischen einer Außenseite des ersten Rades (12a, 22a, 32a) und einer Außenseite des dritten Rades (12c, 22c, 32c) an der ersten Achse einen Wert von Y hat, und X/Y zwischen 0,5 und 1,3 liegt.

9. Radanordnung nach Anspruch 8, wobei die erste Achse (8, 11, 21, 31) ein erstes Ende und ein zweites Ende aufweist und die zweite Achse (9, 13, 23, 36) ein erstes Ende und ein zweites Ende aufweist, und die Radanordnung ferner umfasst (i) eine erste Wange (15, 25), die mit dem ersten Ende der ersten Achse und dem ersten Ende der zweiten Achse in Eingriff steht, und (ii) eine zweite Wange (16, 26), die mit dem zweiten Ende der ersten Achse und dem zweiten Ende der zweiten Achse in Eingriff steht, wobei die erste Wange und die zweite Wange parallel zueinander und senkrecht zur ersten Achse und zur zweiten Achse angeordnet sind, und wobei die erste und die zweite Wange schwenkbar an der Abstützung (6, 7) anordbar sind.

## Revendications

1. Ensemble de roues (10, 20, 30) pour un longeron stabilisateur (6, 7) d'un véhicule de manutention de matières (1), comprenant :
un premier essieu (8, 11, 21, 31) et une première roue (12a, 22a, 32a) montée sur le premier essieu ;
un deuxième essieu (9, 13, 23, 36) et une première roue supplémentaire (14a, 24a,
37a) montée sur le deuxième essieu ;
dans lequel le premier essieu et le deuxième essieu sont montés sur le longeron stabilisateur, en tandem ;
**caractérisé en ce que**
une deuxième roue (12b, 22b, 32b) est montée sur le premier essieu, la première roue et la deuxième roue tournant indépendamment ; et **en ce que**
une deuxième roue supplémentaire (14b, 24b, 37b) est montée sur le deuxième essieu, la première roue supplémentaire et la deuxième roue supplémentaire tournant indépendamment ;
et
une troisième roue (12c, 22c, 32c) est montée sur le premier essieu, et la troisième roue tourne indépendamment des première et deuxième roues du premier essieu.

2. Ensemble de roues selon la revendication 1, dans lequel une distance entre le premier essieu (8, 11, 21, 31) et le deuxième essieu (9, 13, 23, 36) possède une valeur de X, et une distance entre un extérieur de la première roue (12a, 22a, 32a) et un extérieur de la deuxième roue (12b, 22b, 32b) sur le premier essieu possède une valeur de Y, et X/Y est entre 0,5 et 1,3.

3. Ensemble de roues selon la revendication 2, dans lequel le premier essieu (8, 11, 21, 31) possède une première extrémité et une deuxième extrémité et le deuxième essieu (9, 13, 23, 36) possède une première extrémité et une deuxième extrémité, et l'ensemble de roues comprend en outre (i) un premier support (15, 25) qui se met en prise avec la première extrémité du premier essieu et la première extrémité du deuxième essieu, et (ii) un deuxième support (16, 26) qui se met en prise avec la deuxième extrémité du premier essieu et la deuxième extrémité du deuxième essieu, le premier support et le deuxième support étant parallèles l'un à l'autre et perpendiculaires au premier essieu et au deuxième essieu, et les premier et deuxième supports pouvant être montés de manière pivotante sur le longeron stabilisateur.

4. Ensemble de roues selon la revendication 3, comprenant en outre un arbre (27) ayant une première extrémité qui se met en prise avec le premier support (25) et une deuxième extrémité qui se met en prise avec le deuxième support (26), et l'ensemble de roues peut être monté sur le longeron stabilisateur (6, 7), l'ensemble de roues pivotant autour de l'arbre.

5. Ensemble de roues selon la revendication 3, dans lequel le premier support (15) possède une première saillie (18) faisant face vers l'extérieur et le deuxième support (16) possède une deuxième saillie (19) faisant face vers l'extérieur et la première saillie et la deuxième saillie peuvent se mettre en prise avec le longeron stabilisateur (6, 7), l'ensemble de roues pivotant autour des première et deuxième saillies.

6. Ensemble de roues selon la revendication 3, l'ensemble de roues pivotant au niveau d'un point, et le premier essieu et le deuxième essieu sont à un angle de 30° à 180° par rapport au point de pivotement.

7. Ensemble de roues selon la revendication 1, comprenant en outre une troisième roue (14c, 24c, 37c) montée sur le deuxième essieu (9, 13, 23, 36), et la troisième roue tourne indépendamment des première et deuxième roues supplémentaires sur le deuxième essieu.

8. Ensemble de roues selon la revendication 1, dans lequel une distance entre le premier essieu (8, 11, 21, 31) et le deuxième essieu (9, 13, 23, 36) possède une valeur de X, et une distance entre un extérieur de la première roue (12a, 22a, 32a) et un extérieur de la troisième roue (12c, 22c, 32c) sur le premier essieu possède une valeur de Y, et X/Y est entre 0,5 et 1,3.

9. Ensemble de roues selon la revendication 8, dans lequel le premier essieu (8, 11, 21, 31) possède une première extrémité et une deuxième extrémité et le deuxième essieu (9, 13, 23, 36) possède une première extrémité et une deuxième extrémité, et l'ensemble de roues comprend en outre (i) un premier support (15, 25) qui se met en prise avec la première extrémité du premier essieu et la première extrémité du deuxième essieu, et (ii) un deuxième support (16, 26) qui se met en prise avec la deuxième extrémité du premier essieu et la deuxième extrémité du deuxième essieu, le premier support et le deuxième support étant parallèles l'un à l'autre et perpendiculaires au premier essieu et au deuxième essieu, et les premier et deuxième supports pouvant être montés de manière pivotante sur le longeron stabilisateur (6, 7).
